# EUROPEAN PATENT APPLICATION

(11) **EP 2 899 741 A1**
(43) Date of publication of application: **29.07.2015**
(21) Application number: 14183883.9
(22) Date of filing: 08.09.2014
(51) Int. Cl.: H01H 83/00, H01H 83/14, H01H 83/22

(54) **An electrical fault protection device**

(30) Priority: 07.01.2014 GB 201400226
(71) Applicant: Tripco Limited, County Galway (IE)
(72) Inventor: Ward, Patrick, Co. Galway (IE)
(74) Representative: Boyce, Conor

(57) **Abstract**

Provided is an electrical fault protection device comprising: a housing having supply terminals and output terminals; internal conductors passing between the supply terminals and the output terminals via at least one fault protector relay contact; a fault protector operably connected to the at least one fault protector relay contact and responsive to a fault to open the at least one fault protector relay contact; an aperture defined in the housing so as to facilitate the feeding of at least two external supply conductors through the housing; a contactor driven from the output terminals, the contactor incorporating at least one normally open contact corresponding to a respective external supply conductor, wherein a current rating of the at least one contactor contact is substantially greater than a current rating of each of the at least one fault protector relay contact.

## Description

### Field

The present application relates to protection devices for electric circuits and in particular to protection devices for use on multi-current, multi-voltage and multi-phase circuits (MultiPD).

### Background Of The Invention

A residual-current device (RCD) is an electrical wiring device that disconnects a circuit whenever it detects that the electric current is not balanced between the energized conductor and the return neutral conductor. RCD is a generic term which can be used to cover devices including a Residual Current Circuit Breaker (RCCB) or a Residual Current Breaker with Overcurrent protection (RCBO). An RCCB will open automatically only in response to a residual current. An RCBO will open automatically in the event of a residual current or an overload or overcurrent condition. Residual Current Devices (RCDs) are normally rated to carry a certain maximum rated load current and to operate at a certain residual operating current. The physical size of the RCD is largely determined by the rated load current and the number of phases to be protected. It is clear that a 20A rated RCD could not be used to protect a circuit with a load current of 100 - 200A. Furthermore, a 20A single phase RCD cannot be used to protect a multiphase circuit. Conversely, an RCD rated at 200A will have very large terminals, which makes that RCD unsuitable for use on a 20A circuit because the 20A conductors may not be connected securely or reliably in the larger terminals.

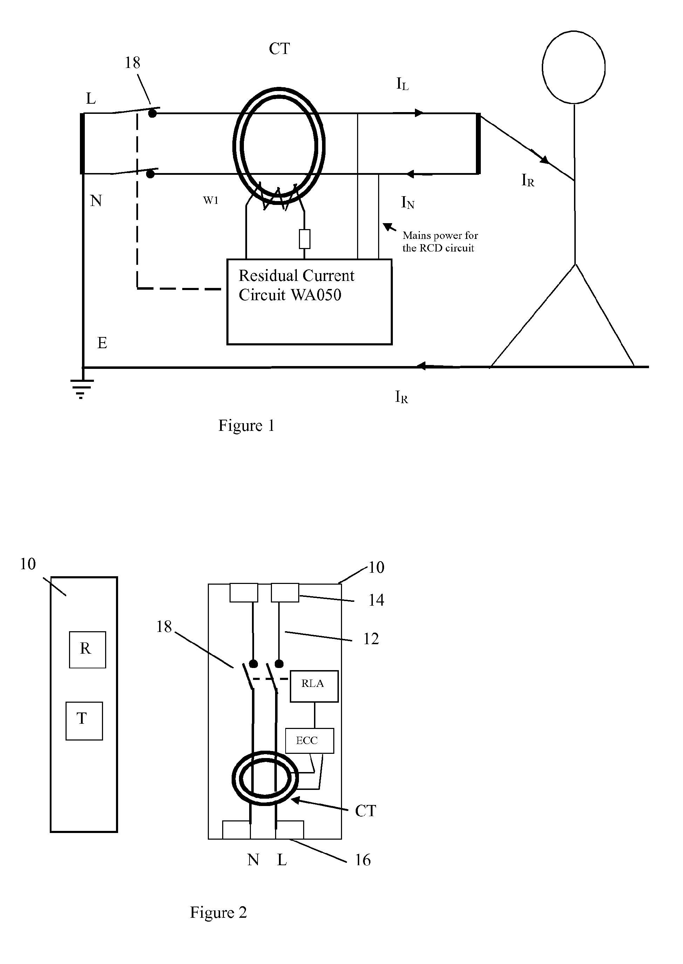

Figure 1 represents an electrical installation protected by a Residual Current Device (RCD), which is also known as a Ground Fault Interrupter (GFI). The circuit of Figure 1 represents a typical single-phase TN installation comprising live and neutral conductors supplying a load. The supply neutral is connected directly to earth, and a solid earth conductor is distributed throughout the installation. The installation is protected by an electronic-type RCD based on the WA050 IC produced by Western Automation and described, for example, in European Patent Publication No. EP2445074 (Ref: WA/50). Under normal conditions, a current I_{L} flows from the supply in the Live conductor to the load and returns to the supply as I_{N} in the neutral conductor.

The live and neutral conductors pass through a current transformer CT whose output is connected to the WA050 IC. The current flow in each conductor as seen by the current transformer CT is of equal magnitude but opposite direction, and as a result the vector sum is seen as zero.

If a person touches a live part, as demonstrated in Figure 1, a residual current I_{R} will flow through the person's body to earth and return to the supply via the earth return path. The current I_{L} will now be greater than I_{N} and the current transformer CT will produce a resultant output in response to this differential or residual current. This output will be sensed by the WA050 IC, and if above a predetermined level, will cause contacts 18 to open and disconnect the supply from the load and thereby provide protection.

Figure 2 shows an RCD arrangement for a single phase circuit. Referring to Figure 2, a schematic front view of the device is shown on the left and a schematic side view on the right. In the arrangement of Figure 2, internal conductors 12 are connected to supply terminals 14 and are fed to load terminals 16 via a normally open relay RLA and its associated contacts 18 and a current transformer CT. The RLA can only be closed when the supply voltage is above a certain level, and will open automatically when the supply voltage falls below a certain level, thus protecting the load from an under-voltage condition. The RLA contacts 18 may be closed mechanically or electrically once the supply voltage is at or above a first level V_{c}, and will open automatically if the supply voltage falls below a second level Vₒ, Vₒ being less than V_{c}. Means to sense the voltage and cause automatic opening of the RLA contacts 18 (tripping) are not shown but are well known to those familiar in the art of circuit breaker operation. Once the RLA contacts 18 are closed, in the event of a residual current fault, the RLA contacts 18 will be opened by an electronic control circuit ECC, and the RLA contacts 18 will remain open until intentionally reset by a reset button (R). The RLA contacts 18 can be opened manually or automatically in response to an overcurrent flow through the internal conductor 12. It is important that Vₒ is set at a level above which the RCD electronic circuitry would cease to function so as to ensure that the RCD can provide protection directly when the RLA contacts 18 are closed, and indirectly by automatic opening of the RLA contacts 18 under low supply voltage conditions. Again referring to Figure 2, RCDs are generally provided with a test button (T) so as to enable the user to verify the operation of the RCD. Exemplary reset and test functionality is described in PCT Publication No. WO2012/131508 (Ref: WA/53).

The circuit arrangement of Figure 2 is typically used to protect a single-phase circuit with a rated voltage of up to 230V and a rated load current of up to 63A, with a rated residual operating current of up to 30mA. This circuit may be contained in a suitable housing 10 as depicted in Figure 2. However, as described above, the maximum load current of the protected circuit is limited to the rating of the internal RLA contacts 18, which may be much lower than 63A.

In view of the above, there exists a need for a protection device that can be utilised on electrical installations with a wide range of load currents, supply voltages and phases.

### Summary

According to the present invention there is provided an electrical fault protection device, comprising: a housing having supply terminals and output terminals; internal conductors passing between the supply terminals and the output terminals via at least one fault protector relay contact; a fault protector operably connected to the at least one fault protector relay contact and responsive to a fault to open the at least one fault protector relay contact; an aperture defined in the housing so as to facilitate the feeding of at least two external supply conductors through the housing; a contactor driven from the output terminals, the contactor incorporating at least one normally open contact corresponding to a respective external supply conductor, wherein a current rating of the at least one contactor contact is substantially greater than a current rating of each of the at least one fault protector relay contact.

The present teaching provides a protection device for an electrical circuit, which uses a standard fault protector to provide protection on different installations with a wide range of load currents, supply voltages and phases.

Preferably, the fault protector comprises any one or more of: a residual current device (RCD), a Residual Current Circuit Breaker (RCCB), a Residual Current Breaker with Overcurrent protection (RCBO), an undervoltage circuit, an overvoltage circuit, or an arc fault circuit interrupter (AFCI).

Preferably, the fault protector comprises a residual current device (RCD), the RCD comprising: a current transformer disposed within the housing through which the internal conductors pass, the current transformer being responsive to currents in the internal conductors to produce an output in response to a non-zero vector sum of said currents, and circuitry responsive to the current transformer output to open each of the at least one fault protector relay contact if the non-zero vector sum of currents meets predetermined criteria.

Preferably, the supply terminals are arranged to connect to respective external supply conductors

Preferably, the contactor comprises a coil and the coil is connected to the output terminals. Further preferably, the coil is configured to be energised by a current derived from the output terminals, thereby facilitating closing of the at least one contactor. Most preferably, the current derived from the output terminals is configured to be transformed or rectified to a DC current. In this case, the coil can comprise a DC coil.

Preferably, each of the at least one fault protector relay contact is rated to carry a current of up to 63A and wherein each of the at least one contactor contact is rated to carry a current of up to 400A.

Preferably, where the fault protector comprises an RCD circuit, the circuitry is responsive to a supply voltage to the supply terminals reaching a first level V_{c}, to close each of the at least one fault protector relay contact, and the circuitry is responsive to the supply voltage falling below a second level Vₒ, Vₒ being less than V_{c}, to open each of the at least one fault protector relay contact and consequently each of the at least one contactor.

Further preferably, the fault protector further comprises a reset switch operably connected to each of the at least one fault protector relay contact to facilitate reclosing of the at least one fault protector relay contact by the user, and wherein the circuitry is responsive to the supply voltage exceeding V_{c} to maintain each of the at least one fault protector relay contact closed.

Alternatively, the circuitry is responsive to a residual current fault exceeding a rated residual operating current of the fault protector, to open the at least one fault protector relay contact and remove the supply to the contactor coil. Most preferably, the at least one fault protector relay contact is configured to be opened automatically.

Preferably, each of the at least one contactor contact is configured to automatically close and provide power to a load.

Preferably, the aperture is configured to facilitate the feedthrough of external conductors configured to carry a voltage of up to 600V and a load current of up to 400A.

Preferably, a supply voltage provided to the supply terminals is derived from a single phase supply, two-phase supply or three-phase supply or a DC supply.

Preferably, the fault protector comprises at least one of self-testing (ST) functionality and end of life (EOL) indication functionality.

Preferably, where the fault protector comprises an RCD circuit, the RCD has multiple settings of residual operating current.

Further preferably, the operating residual current level of the RCD is configured to match the load current level of a protected circuit.

Alternatively, the electrical circuitry in the RCD is electrically connected to the current transformer via a burden resistor and one or more other resistors connected in parallel, wherein the one or more resistors can be selectively switched in to the circuit thereby reducing the effective resistance across the current transformer, which in turn increases the operating trip current of the RCD. Most preferably, each of the resistors is switchable via a respective mechanical switch, field effect transistor (FET) switch, or programmable IC.

The residual operating current level can be set between 6mA and 500mA.

The fault protector can be latched mechanically or electrically.

The fault can comprise at least one of an overcurrent condition, a residual current fault, an electrical arc, or an end-of-life (EOL) indication in the fault protector.

Preferably, the fault protector is provided in the housing.

The contactor can be latched either mechanically or electrically.

The contactor can comprise either a relay, or a circuit breaker with a shunt trip coil.

### Brief Description Of The Drawings

The present application will now be described with reference to the accompanying drawings in which:
Figure 1 represents an electrical installation protected by a Residual Current Device (RCD), which is also known as a Ground Fault Circuit Interrupter (GFCI);
Figure 2 shows an RCD arrangement for a single-phase circuit;
Figure 3 shows a Residual Current Circuit Breaker (RCCB) arrangement for a single-phase circuit, including an aperture defined in a housing;
Figure 4 is a circuit diagram illustrating a protection device including a fault protector in the form of an RCCB connected to a contactor, according to an embodiment of the present teaching;
Figure 5 is a perspective view of a housing for a fault protector, according to an embodiment of the present teaching;
Figure 6 illustrates a circuit arrangement for adjusting the operating residual current level of an RCD, according to an embodiment of the present teaching; and
Figure 7 illustrates a control panel for a fault protector such as an RCD, according to an embodiment of the present teaching.

### Detailed Description Of The Preferred Embodiments

The present teaching uses a standard fault protector in conjunction with a contactor to provide protection on different installations with a wide range of load currents, supply voltages and phases.

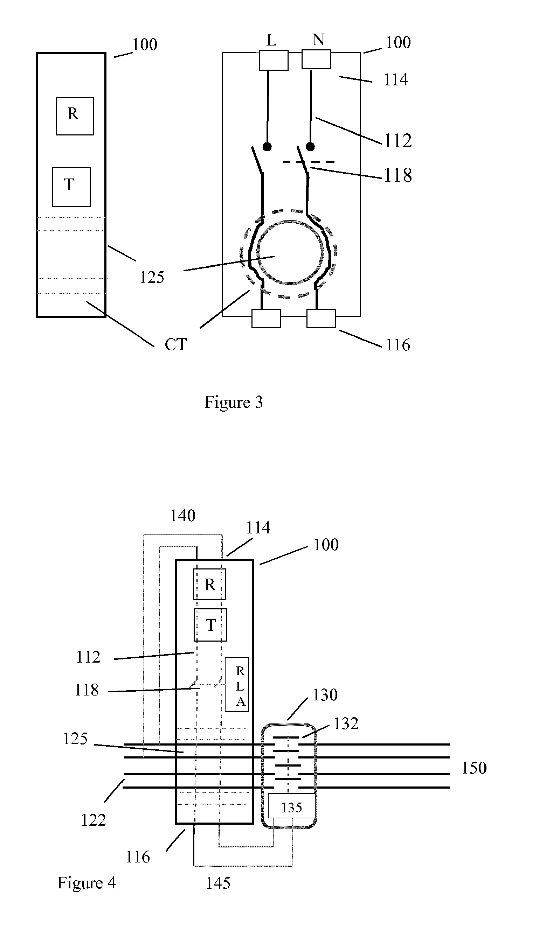

According to one embodiment, the fault protector may be an RCD and is similar in construction to the RCD described in European Patent No. EP2132761 (Ref: WA/40). As has been described above, there are various types of RCD, including a Residual Current Breaker with Overcurrent protection (RCBO) and a Residual Current Circuit Breaker without Overcurrent protection (RCCB). Figure 3 shows a Residual Current Circuit Breaker (RCCB) arrangement for a single-phase circuit. Referring to Figure 3, the RCCB comprises a housing 100 defining an aperture 125 extending between sidewalls of the housing 100. The arrangement of Figure 3 is a variation on the RCD of Figure 2. As with Figure 2, a schematic front view of the device is shown on the left and a schematic side view on the right. As such, it can be seen that the aperture 125, shown in dotted lines on the left and in solid lines on the right, extends between the sidewalls of the housing 100. Referring to Figure 3, a current transformer CT with a relatively larger internal diameter is fitted within the housing 100 with the aperture passing through the centre of the CT. Internal conductors 112 are connected to supply terminals 114 and are fed to output (load) terminals 116 via normally open relays and their associated contacts 118. In the illustrated embodiment, each of the internal conductors passes through a respective contact 118, however, it will be appreciated that it is also possible to operate with a contact 118 on only one of the conductors. The contacts 118 are connected to the output terminals 116 via the current transformer CT and pass around the aperture 125. The internal conductors 112 may be passed through the current transformer CT in a manner so as to leave as large a space as possible within the centre of the current transformer CT. As will be described in more detail below, the aperture 125 facilitates the feeding of at least two external conductors (not shown) to a load via the current transformer CT and the aperture 125.

The RCD 100 is configured to operate within the voltage and current limits for a single phase supply and is thus rated to carry supply currents of approximately 20A - thus the supply terminals 114, load terminals 116 and contacts 118 are sized accordingly. In single phase installations, Live and Neutral supply conductors are connected to the terminals 114 and load conductors are connected to the terminals 116.

In accordance with the present invention, the fault protector 100 of Figure 3 can also be used to provide protection to circuits with higher voltage and current ratings, and single or multi-phase circuits, as demonstrated in Figure 4.

In Figure 4, the supply voltage 140 to the fault protector 100 is derived from two phases (typically N & P1) from three-phase supply conductors 122 which pass through the aperture 125 of the fault protector 100. The supply conductors 122 also pass through normally open contacts 132 of a contactor 130 and in turn connect to a load 150. The contacts 132 are rated for the supply conductors 122, for example up to 400A. The contactor 130 includes a coil 135 which is driven from the output terminals 116 of the fault protector 100. When the supply voltage 140 to the fault protector reaches a voltage V_{c}, the RLA contacts 118 in the fault protector 100 are closed, thus providing a supply to the coil 135 of the contactor 130 via the output terminals 116. The RLA contacts 118 may be closed manually or automatically and the fault protector may be latched either mechanically or electrically. In the case of the fault protector being mechanically latched, it will not be responsive to supply voltage conditions. Regardless, when the coil 135 is energised, the contacts 132 of the contactor 130 may be configured to automatically close and provide power to a load 150. The contactor 130 may be a conventional contactor, or a relay, or a circuit breaker with a shunt trip coil. In the case of a circuit breaker with a shunt trip coil, the breaker may trip because of the removal of a supply to its coil, or by the application of a supply to its coil, and the fault protector 100 can be configured accordingly. Also, the contactor 130 may be mechanically latched and not responsive to supply voltage conditions. Thus, the contactor 130 may be latched either mechanically or electrically.

In the event of a residual current fault on the load 150 exceeding the rated residual operating current of the fault protector 100, the RLA contacts 118 of the fault protector may be configured to open automatically and remove the supply to the coil 135 of the contactor 130. In this manner, the fault protector 100, in this case an RCCB, can provide protection to the three-phase circuit.

In another embodiment, in the event of an internal fault in the fault protector such as an end-of-life (EOL) indication, the RLA contacts 118 of the fault protector 100 may be configured to open and similarly cause the contacts 132 of the contactor 130 to open, thus protecting the three-phase circuit.

The circuit being protected using the arrangement of Figure 4 is not limited to a three-phase circuit, and may be a single-phase, two-phase or three-phase circuit. The aperture 125 may be designed to be large enough to facilitate the feedthrough of large external conductors with high voltage and load currents, e.g. 600V/400A AC. In effect therefore, the protection provided by a low rated fault protector 100 can be leveraged to provide protection to circuits with much higher current and voltage ratings. For example, each of the at least one fault protector relay contact 118 may be rated to carry a current of 20A, and each of the at least one contactor relay contact 132 may be rated to carry a current of 400A.

The coil 135 of the contactor 130 may be an AC coil or a DC coil. In this regard, the coil 135 may be an AC coil, and a supply output 145 from the fault protector 100 may be an AC output that is supplied to the coil 135. However, it can also be arranged that the output of the protector 100 be rectified so as to provide a DC suitable for operating a DC coil on the contactor 130. The contactor 130 can include suitable circuitry (not shown) to ensure only sufficient power, for example, 200mA is drawn through the internal conductors 112 to power the coil 135. In an alternative configuration, an AC supply current output 145 from the fault protector 100 may be transformed or rectified to a DC current before being supplied to a DC contactor coil.

It will also be appreciated that the fault protector 100 can be arranged to operate with either an AC or DC supply, for example, as described in PCT Publication No. WO2012/038478 (Ref: WA/49) and European Patent Publication No. EP2632010 (Ref: WA/63). So for example, an entirely DC based system could be protected by the fault protector 100 in a case where the fault protector 100 is suitable for detection of DC residual fault currents. In this case, the supply 122 would be a DC supply connected to the load 150 via the contacts 132 of the contactor 130. The fault protector 100 would be supplied from the DC supply 122 and would detect a DC residual current in excess of its rating flowing in the output of the fault protector 100 or in the load 150.

Again referring to Figure 4, the contactor 130 may be installed at a location some distance from the fault protector 100. Nonetheless, the supply and the load served by the contactor 130 may both be protected simultaneously by the fault protector 100.

In an alternative arrangement to that illustrated in Figure 4 where a pair of the supply conductors 122 are tapped to provide the supply for the fault protector 100, supply terminals 114 of the fault protector can be connected instead to a pair of supply side contacts of the contactor 130. This obviates the necessity to separately connect the supply circuit to the external conductors 122 on one side of the fault protector 100 with the contactor 130 disposed at an opposite side and can be useful where the contactor is located relatively close to the fault protector 100.

In some embodiments, the internal circuit breaker of the fault protector is a type that is responsive to varying supply voltage levels, whether AC or DC. Thus, in the event of the supply to the fault protector falling below Vₒ for any reason, protection is provided automatically to the protected circuit by automatic opening of the RLA relay 118 and the contactor contacts 132.

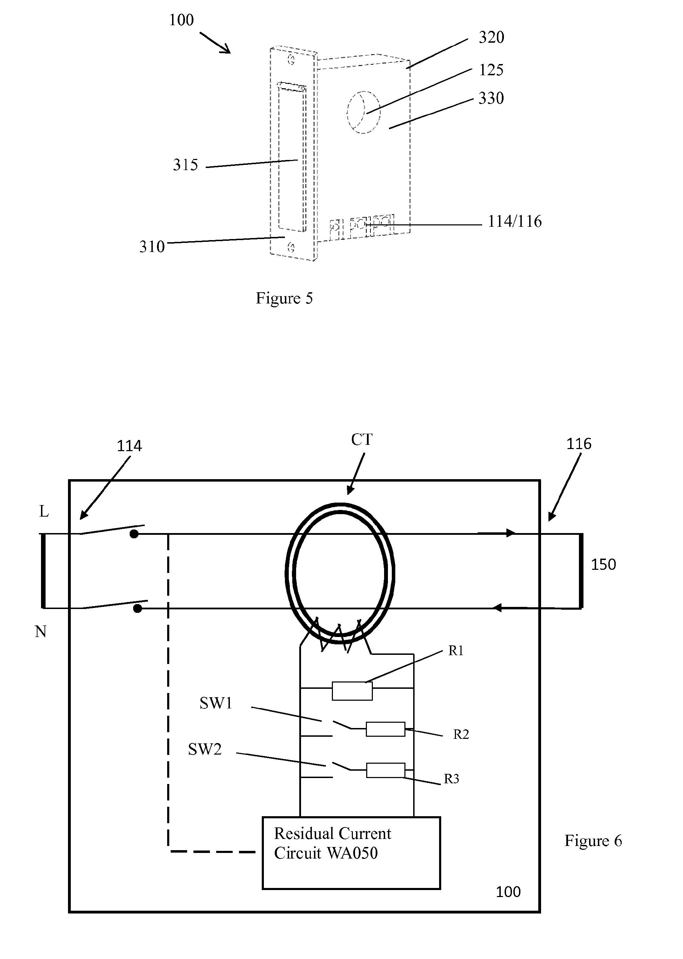

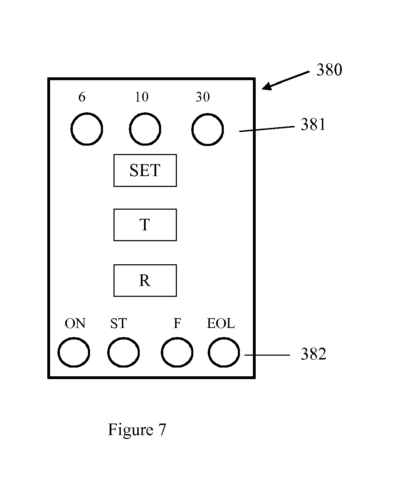

Figure 5 is a perspective view of a fault protector 100 employed in embodiments of the present invention. It will be appreciated that the overall fault protection device of the present teaching includes the fault protector and a contactor as described above, however the contactor may be located some distance from the fault protector. The housing 100 may be configured to accommodate any of the fault protectors described above, and/or any other type of suitable electrical protection. Referring to Figure 5, the housing 100 comprises a front plate 310 for coupling to an electrical equipment installation. The housing 100 may have a generally rectilinear shape. A main body 320 of the housing 100, i.e. a portion behind the front plate 310, may contain the toroidal core CT of the current transformer and other protection circuitry. The main body 320 may also incorporate electrical sockets 114/116 each comprising live L, neutral N and earth E terminals into which conductors can be inserted for connection to each of a supply and load. The cover plate 310 may include a hinged flap 315 which can be swung over a control panel, and thereby releasably secured in place. While the control panel can be as simple as a test and reset button as shown in Figures 3 and 4, a more elaborate control panel will be described in relation to Figure 7 below.

Referring again to Figure 5, the housing 100 may have opposing substantially parallel sidewalls 330. The housing 300 defines an aperture 125 extending between the sidewalls 330 for receiving external conductors (not shown). As mentioned above, the aperture 125 is provided coaxially within the current transformer, and is preferably configured to facilitate the feedthrough of large external conductors with high voltage and load currents, e.g. 600V/400A AC.

The fault protector 100 of Figures 3 and 4 may have multiple settings of residual operating current, and may contain self-testing means and end of life indication. It may be advantageous to be able to change the operating residual current level of the RCD to suit the load current level of the protected circuit. One means of achieving this is demonstrated in Figure 6. Figure 6 illustrates a circuit arrangement for adjusting the operating residual current level of an RCD used in the protective device of the present teaching. In Figure 6, a burden resistor R1 sets the initial load on the current transformer CT coil, and hence the initial threshold for the residual operating current of the RCD. Resistors R2 and R3 may be switched in or out of the circuit by switches SW1 and SW2, respectively. When R2 is switched in to the circuit, the effective resistance across the current transformer CT coil is reduced, which in turn increases the operating trip current of the RCD. When R3 is also switched into the circuit, the burden on the current transformer CT increases further, and the residual operating current level is further increased. With this arrangement, several values of residual operating current may be achieved. For example, with SW1 & SW2 open, the operating current may be 6mA. With only SW1 closed the operating current may be 10mA. With only SW2 closed, the operating current may be 30mA. With SW1 & SW2 both closed, the operating current may be 100mA. It will be appreciated that further resistors may be connected in parallel and switched in and out of the circuit, thus providing different values of the operating residual current of the RCD. Thus, the residual operating current level may be set to anywhere between about 6mA and 500mA.

SW1 and SW2 may be manually operated mechanical switches or electronic switches, for example, the switches may be field effect transistor (FET) switches. Use of FETS facilitates electronic operation, for example, in conjunction with a programmable IC (PIC), etc.

Referring now to Figure 7, in another embodiment of the present teaching, the housing for the fault protector may be equipped with a control panel 380 for changing the settings and viewing the state of the fault protector 100. The control panel 380 may be located in the housing 100 illustrated in Figure 5. In particular, the control panel 380 may be disposed on the front plate 310 behind the hinged flap 315. The control panel 380 may contain on/off switches as well as LEDs, to assist in using and configuring the fault protector. In one embodiment, the control panel 380 is implemented with a membrane including the switches and LEDs. Membrane-type switches are usually operated by applying force via a finger to a membrane directly above the switch. The switch changes state in response to a limited amount of displacement of the membrane. An example of a suitable switch circuit is an electromechanical switching circuit described in European Application No. 13183820.3 & US Application No. 14/027,348 (Ref: WA/66).

In the example of Figure 7, a top row 381 of the control panel 380 may comprise LEDs to indicate the residual operating current setting. Operation of a membrane based switch SET below the top row 381 incrementally switches from one setting to the next until the desired setting has been chosen, 6, 10, or 30mA for example, depending on the load current level of the protected circuit. The switches T, and R, allow the user to test and reset the fault protector, respectively. Such functionality is described in PCT Publication No. WO2012/131508 (Ref: WA/53). At the bottom of the control panel are a number of LED indicators 282 which function to signify the current operating state of the fault protector. These indictors may comprise ON, SELF-TEST (ST), FAULT (F) and end of life (EOL). For example, the control panel 380 may contain SELF-TEST functionality to indicate to the user whether or not the RCD is capable of performing its protective function. Such SELF-TEST and EOL functionality is also described in PCT Publication No. WO2012/131508 (Ref: WA/53).

As mentioned above, the RCD of Figure 3 may be replaced and/or supplemented by other fault protectors. For example, the fault protector used in the device of the present teaching may include an arc fault circuit interrupter (AFCI). Referring to Figure 4, an AFCI may be used in the arrangement of Figure 4 to provide arc fault protection on circuits protected directly by the fault protector 100 and on circuits with higher operating voltages and currents than the protective device itself. Examples of such arc fault circuit interrupters (AFCIs) are described in European Patent Publication No. EP2577826 (Ref: WA/47A).

In the foregoing embodiments the present teaching has been described in relation to an AC supply using a current transformer with a toroidal core as a differential current sensor. However, other types of sensor may be used, based upon the use of a toroidal or other apertured core (e.g. Hall effect current sensor), or otherwise.

The present teaching may also be applied to DC applications provided that the fault detector is of a type which can detect DC faults, for example as described in PCT Publication No. WO2012/038478 (Ref: WA/49) and European Patent Publication No. EP2632010 (Ref: WA/63). The use of DC-responsive RCDs is common in DC installations supplying underground trains, in photovoltaic generators and more recently in electric vehicle (EV) charging circuits.

In summary, the present teaching provides an electrical fault protection device comprising at least one standard fault protector, which can provide protection for a circuit protected directly by the fault protector and additionally on circuits with higher operating voltages and currents than the fault protector itself. Accordingly, the protection device can be used on multi-current, multi-voltage, multi-phase circuits (MultiPD), and on AC and DC circuits

Although specific embodiments have been illustrated and described herein for purposes of description of the preferred embodiments, it will be appreciated by those of ordinary skill in the art that a wide variety of alternate and/or equivalent implementations may be substituted for the specific embodiments shown and described without departing from the scope of the present teaching. Those with skill in the art will readily appreciate that the present teaching may be implemented in a very wide variety of embodiments. This application is intended to cover any adaptations or variations of the embodiments discussed herein. Therefore, it is manifestly intended that this present teaching be limited only by the claims and the equivalents thereof.

The words comprises/comprising when used in this specification are to specify the presence of stated features, integers, steps or components but does not preclude the presence or addition of one or more other features, integers, steps, components or groups thereof.

## Claims

1. An electrical fault protection device, comprising:
a housing having supply terminals and output terminals;
internal conductors passing between the supply terminals and the output terminals via at least one fault protector relay contact;
a fault protector operably connected to the at least one fault protector relay contact and responsive to a fault to open the at least one fault protector relay contact;
an aperture defined in the housing so as to facilitate the feeding of at least two external supply conductors through the housing;
a contactor driven from the output terminals, the contactor incorporating at least one normally open contact corresponding to a respective external supply conductor,
wherein a current rating of the at least one contactor contact is substantially greater than a current rating of each of the at least one fault protector relay contact.

2. The device of claim 1, wherein the fault protector comprises any one or more of: a residual current device (RCD), a Residual Current Circuit Breaker (RCCB), a Residual Current Breaker with Overcurrent protection (RCBO), an undervoltage circuit, an overvoltage circuit, or an arc fault circuit interrupter (AFCI).

3. The device of claim 1, wherein the fault protector comprises a residual current device (RCD), the RCD comprising:
a current transformer disposed within the housing through which the internal conductors pass, the current transformer being responsive to currents in the internal conductors to produce an output in response to a non-zero vector sum of said currents, and
circuitry responsive to the current transformer output to open each of the at least one fault protector relay contact if the non-zero vector sum of currents meets predetermined criteria.

4. The device of claim 1, wherein the supply terminals are arranged to connect to respective external supply conductors

5. The device of claim 1, wherein the contactor comprises a coil and the coil is connected to the output terminals, the coil being configured to be energised by a current derived from the output terminals, thereby facilitating closing of the at least one contactor, wherein the current derived from the output terminals is configured to be transformed or rectified to a DC current and the coil comprises a DC coil.

6. The device of claim 1, wherein each of the at least one fault protector relay contact is rated to carry a current of up to 63A and wherein each of the at least one contactor contact is rated to carry a current of up to 400A.

7. The device according to claim 3, wherein the fault protector comprises an RCD circuit, wherein:
the circuitry is responsive to a supply voltage to the supply terminals reaching a first level V_{c}, to close each of the at least one fault protector relay contact, and
the circuitry is responsive to the supply voltage falling below a second level Vₒ, Vₒ being less than V_{c}, to open each of the at least one fault protector relay contact and consequently each of the at least one contactor.

8. The device of claim 7, wherein the fault protector further comprises a reset switch operably connected to each of the at least one fault protector relay contact to facilitate reclosing of the at least one fault protector relay contact by the user, and wherein the circuitry is responsive to the supply voltage exceeding V_{c} to maintain each of the at least one fault protector relay contact closed.

9. The device of claim 7, wherein the circuitry is responsive to a residual current fault exceeding a rated residual operating current of the fault protector, to open the at least one fault protector relay contact and remove the supply to the contactor coil, and wherein the at least one fault protector relay contact is configured to be opened automatically.

10. The device of claim 1, wherein each of the at least one contactor contact is configured to automatically close and provide power to a load.

11. The device of claim 1, wherein the aperture is configured to facilitate the feedthrough of external conductors configured to carry a voltage of up to 600V and a load current of up to 400A.

12. The device of claim 1, wherein a supply voltage provided to the supply terminals is derived from a single phase supply, two-phase supply or three-phase supply or a DC supply.

13. The device of claim 3, wherein the RCD has multiple settings of residual operating current and wherein the operating residual current level of the RCD is configured to match the load current level of a protected circuit.

14. The device of claim 3, wherein the RCD has multiple settings of residual operating current and wherein the electrical circuitry in the RCD is electrically connected to the current transformer via a burden resistor and one or more other resistors connected in parallel, wherein the one or more resistors can be selectively switched in to the circuit thereby reducing the effective resistance across the current transformer, which in turn increases the operating trip current of the RCD, and wherein each of the resistors is switchable via a respective mechanical switch, field effect transistor (FET) switch, or programmable IC.

15. The device of claim 3, wherein the RCD has multiple settings of residual operating current and wherein the residual operating current level can be set between 6mA and 500mA.
